# EUROPEAN PATENT APPLICATION

(11) **EP 4 206 836 A1**
(43) Date of publication of application: **05.07.2023**
(21) Application number: 20955704.0
(22) Date of filing: 30.09.2020
(51) Int. Cl.: G05B 19/418, G05B 17/02

(54) **MULTI-TYPE INDUSTRIAL ROBOT CONTROL SYSTEM, APPARATUS AND METHOD, AND STORAGE MEDIUM**

(71) Applicant: Siemens Aktiengesellschaft, 80333 München (DE)
(72) Inventor: CHEN, Zhimin, Beijing 100085 (CN); WANG, Zijian, Beijing 100102 (CN); ZHAO, Xu, Beijing 100000 (CN); LIU, Wenfeng, Beijing 102600 (CN); FAN, Shunjie, Beijing 100102 (CN)
(74) Representative: Isarpatent
(86) International application number: PCT/CN2020/119428
(87) International publication number: WO 2022/067679

(57) **Abstract**

Disclosed are a multi-type industrial robot control system, apparatus and method, and a storage medium. The system comprises an automated controller and a PLC-robot bridge, wherein the automated controller stores general-purpose robot control functional blocks generated in compliance with a unified design standard, calls a corresponding robot control functional block according to a control program which is programmed by a user on the basis of the robot control functional block and concerns a robot, and outputs first command data; the PLC-robot bridge abstracts robot interfaces of corresponding offline programming functions of different types of robots into a unified virtual interface, calls a corresponding offline programming function of a corresponding type of robot by means of the unified virtual interface and according to the first command data, generates second command data and outputs the second command data to a corresponding robot controller; and the corresponding robot controller controls a corresponding robot.

## Description

### Technical field

The present application relates to the field of robot control, in particular to a multi-type industrial robot control system, apparatus and method, and a computer-readable storage medium.

### Background art

The integration of industrial robots with automated systems plays a key role in manufacturing. However, automation controllers and robot controllers use different engineering environments and tools. Greater effort is needed in engineering and debugging. Different robot manufacturers have different engineering software, presenting a challenge to programming and maintenance.

### Summary of the invention

In view of the above, the embodiments of the present application propose a multi-type industrial robot control system and apparatus in one aspect, and in another aspect propose a multi-type industrial robot control method and a computer-readable storage medium, to realize unified control of industrial robots of different types.

A multi-type industrial robot control system proposed in embodiments of the present application comprises: an automation controller and a programmable logic controller (PLC)-robot bridge, wherein the automation controller stores a general-purpose robot control function block generated in compliance with a unified design standard, calls a corresponding robot control function block according to a control program for a robot and in conjunction with robot state data received from the PLC-robot bridge, the control program being written by a user based on the general-purpose robot control function block, and outputs corresponding first command data to the PLC-robot bridge; the PLC-robot bridge virtualizes robot interfaces of corresponding offline programming functions of different types of robot as a unified virtual interface, calls a corresponding offline programming function of a corresponding type of robot via the unified virtual interface according to the first command data, and generates second command data for output to a corresponding robot controller, and the corresponding robot controller controls a corresponding robot; at the same time, robot state data from a corresponding type of robot is received via the unified virtual interface, and the robot state data is fed back to the automation controller.

In one embodiment, the PLC-robot bridge comprises: a data switch, for receiving the first command data from the automation controller; and sending the robot state data to the automation controller; a robot control application programming interface, for virtualizing robot interfaces of corresponding offline programming functions of different types of robot as a unified virtual interface; a command manager, for performing a correctness check on the first command data, and when the check is passed, extracting a valid data field therefrom for parsing to obtain a corresponding command set, and caching the command set; a command execution module, for reading the command set, and calling and running a corresponding offline programming function of a corresponding robot via the virtual interface provided by the robot control application programming interface according to the command set, to generate second command data; a robot state manager, for reading, via the virtual interface provided by the robot control application programming interface, robot state data returned by the robot controller, and providing the robot state data to the data switch; a robot communication interface, for outputting the second command data to a corresponding robot controller, and receiving robot state data returned by the robot controller.

In one embodiment, the command manager comprises: a data preprocessor, for performing a correctness check on the first command data, and when the check is passed, extracting a valid data field therefrom; a command parser, for parsing the valid data field to obtain a corresponding command set; and a command buffer zone, for caching the command set.

In one embodiment, the data preprocessor is further used to receive robot state data from the robot state manager, and provide the robot state data to the command parser; and the command parser further obtains a corresponding command set according to the robot state data.

In one embodiment, the multi-type industrial robot control system further comprises: a robot controller, for receiving the second command data from the PLC-robot bridge, and controlling a corresponding robot to perform a corresponding operation according to the second command data; and feeding state data of the robot back to the PLC-robot bridge.

A multi-type industrial robot control apparatus proposed in embodiments of the present application comprises: a data switch, for receiving first command data from an automation controller; and sending acquired robot state data to the automation controller; the first command data being first command data obtained by the automation controller calling a corresponding robot control function block according to a control program for a robot and in conjunction with robot state data from the switch, the control program being written by a user based on a general-purpose robot control function block, which is generated in compliance with a unified design standard and stored in the automation controller; a robot control application programming interface, for virtualizing robot interfaces of corresponding offline programming functions of different types of robot as a unified virtual interface; a command manager, for performing a correctness check on the first command data, and when the check is passed, extracting a valid data field therefrom for parsing to obtain a corresponding command set, and caching the command set; a command execution module, for reading the command set, and calling and running a corresponding offline programming function of a corresponding robot via the virtual interface provided by the robot control application programming interface according to the command set, to generate second command data; a robot state manager, for reading, via the virtual interface provided by the robot control application programming interface, robot state data returned by the robot controller, packaging the robot state data and then providing same to the data switch; a robot communication interface, for outputting the second command data to a corresponding robot controller, and receiving robot state data returned by the robot controller.

In one embodiment, the command manager comprises: a data preprocessor, for performing a correctness check on the first command data, and when the check is passed, extracting a valid data field therefrom; a command parser, for parsing the valid data field to obtain a corresponding command set; and a command buffer zone, for caching the command set.

In one embodiment, the data preprocessor is further used to receive robot state data from the robot state manager, and provide the robot state data to the command parser; the command parser further obtains a corresponding command set according to the robot state data.

A multi-type industrial robot control method proposed in embodiments of the present application comprises: an automation controller receiving a control program for a robot written by a user based on a general-purpose robot control function block, which is generated in compliance with a unified design standard and stored in the automation controller; and receiving robot state data fed back by a PLC-robot bridge; calling a corresponding robot control function block according to the control program and the robot state data, and outputting corresponding first command data to the PLC-robot bridge; the PLC-robot bridge receiving the first command data, calling a corresponding offline programming function of a corresponding type of robot via a unified virtual interface according to the first command data, generating second command data for output to a corresponding robot controller, and the corresponding robot controller controlling a corresponding robot; the unified virtual interface being obtained by virtualizing robot interfaces of corresponding offline programming functions of different types of robot; the PLC-robot bridge receiving robot state data from a corresponding type of robot via the unified virtual interface, and feeding the robot state data back to the automation controller.

In one embodiment, the PLC-robot bridge receiving the first command data, and calling a corresponding offline programming function of a corresponding type of robot via a unified virtual interface according to the first command data, comprises: the PLC-robot bridge receiving the first command data, and performing a correctness check on the first command data; when the check is passed, extracting a valid data field therefrom, and parsing the valid data field to obtain a corresponding command set, and caching the command set; reading the cached command set, and calling and running a corresponding offline programming function of a corresponding robot via the virtual interface according to the command set.

In one embodiment, the PLC-robot bridge is further used for generating a corresponding command set in conjunction with the robot state data when parsing the valid data field.

A multi-type industrial robot control system proposed in embodiments of the present application comprises: at least one memory and at least one processor, wherein: the at least one memory is used to store a computer program; the at least one processor is used to call the computer program stored in the at least one memory to make the system perform the multi-type industrial robot control method as described in any of the above embodiments.

A computer-readable storage medium proposed in embodiments of the present application has stored thereon a computer program; the computer program is executable by a processor and realizes the multi-type industrial robot control method as described in any of the above embodiments.

It can be seen from the above solution that because a bridge connecting the automation controller and the robot controller, i.e. the PLC-robot bridge, is provided in the embodiments of the present application, the PLC-robot bridge virtualizing robot interfaces of corresponding offline programming functions of different types of robot as a unified virtual interface, a set of general-purpose robot function blocks may be provided in the automation controller, such that the user does not need to be concerned about programming differences between different robots, and can simply use the general-purpose robot function block directly to write an instantiation control program for a robot; subsequently, the PLC-robot bridge converts command data from the automation controller to a call instruction for an offline programming function of a corresponding type of robot via the unified virtual interface, and generates a corresponding control instruction to send to the robot controller, thereby realizing control of the corresponding robot.

In addition, by further configuring data checking, parsing and buffering operations in the PLC-robot bridge, the automation controller is enabled to send batches of control commands to the PLC-robot bridge, and the PLC-robot bridge then manages the process of executing sub-commands.

Furthermore, by having the PLC-robot bridge further manage the process of executing sub-commands according to robot state data, the reliability of command execution is improved.

### Brief description of the drawings

Preferred embodiments of the present application are described in detail below by referring to the drawings, to give those skilled in the art a clearer understanding of the abovementioned and other features and advantages of the present application. In the drawings:
Fig. 1 is an exemplary structural drawing of a multi-type industrial robot control system in an embodiment of the present application.
Fig. 2 is a structural schematic drawing of robot control APIs in one example of the present application.
Fig. 3 is an exemplary flow chart of a multi-type industrial robot control method in an embodiment of the present application.
Fig. 4 is a structural schematic drawing of another multi-type industrial robot control system in an embodiment of the present application.

### Key to the drawings:

| Label | Meaning |
|---|---|
| 1 | Automation controller |
| 11 | Automation control function block |
| 12 | Robot control function block |
| 13 | User program module |
| 14 | First controller communication interface |
| 2 | PLC-robot bridge |
| 21 | Second controller communication interface |
| 22 | Data switch |
| 23 | Command manager |
| 231 | Data preprocessor |
| 232 | Command parser |
| 233 | Command buffer zone |
| 24 | Command execution module |
| 25 | Robot state manager |
| 26 | Robot control application interface (APIs) |
| 261 | Virtual interface |
| 262A, 262B, 262C | Robot interfaces |
| 263A, 263B, 263C | Offline programming functions |
| 27 | Robot communication interface |
| 3 | Robot controller |
| 4 | Mechanical arm |
| 301 - 304 | Steps |
| 41 | Memory |
| 42 | Processor |
| 43 | Bus |

### Detailed description of the invention

In the embodiments of the present application, consideration is given to the fact that in the Siemens Totally Integrated Automation (TIA Portal) platform, robot-PLC (programmable logic controller) integration with many leading robots (e.g. KUKA robots, DENSO robots, STAUBLI robots and YASAKAWA MOTOMAN robots) is possible. For this purpose, KUKA robots have provided the KUKA.PLC mxAutomation function block library, DENSO robots have the DENSO Command Slave function block library, and STAUBLI robots have the STAUBLI Unival PLC function block library; these module libraries can support the integration of the products of these robot companies with the TIA Portal platform, and can eliminate programming work at the robot controller. In addition, ABB and B&R have similar concepts in machine-centered robot solutions. However, they still have the following shortcomings:
The function blocks of different robot manufacturers are incompatible, because these function blocks are custom-made by the corresponding robot manufacturer, and therefore are not suitable for robots of other manufacturers. In actual applications, an automation controller program for a robot of one particular manufacturer might not be able to be used again for integration of a robot of another manufacturer. In addition, for a robot manufacturer, the development of a PLC-robot module library requires major investment and is very difficult, and small and medium-sized robot manufacturers in particular simply do not have either the opportunity or the ability to develop a module library capable of integration with the TIA Portal platform.

For this reason, a multi-type industrial robot control system is proposed in embodiments of the present application, for a function block and a unified interface programmed for multiple types of industrial robot, wherein a unified programming interface can screen different robots, thus allowing an automation controller program to be reused.

To clarify the objective, technical solution and advantages of the present application, embodiments are given below to explain the present application in further detail.

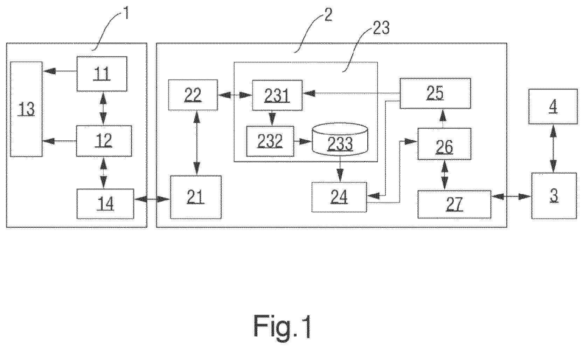

Fig. 1 is an exemplary structural drawing of a multi-type industrial robot control system in an embodiment of the present application. As shown in Fig. 1, the system comprises an automation controller 1 and a PLC-robot bridge 2.

The automation controller 1, in addition to comprising another necessary function block 11 for automation control, also comprises a robot control function block 12; these robot control function blocks 12 may be used to perform all robot motion control and action execution related functions, including robot motion control, fault monitoring, state monitoring, robot operating parameter configuration, etc. These robot control function blocks 12 comply with a unified design standard, e.g. a function block definition or open standard, to unify and simplify the function block programming complexity. In other words, these robot control function blocks are no longer function blocks for one particular type of robot only, instead being a type of general-purpose robot control function block. These robot control function blocks are equivalent to other PLC function blocks in the TIA Portal, so a user can use these function blocks, based on a unified standard, to perform instantiation programming for the control of different robots, i.e. a user program module 13 is used to receive a control program for a robot written by the user based on the robot control function block, and run the control program by calling a corresponding function block, to obtain a command data packet; for ease of identification, this is called first command data here. The command data packet may be sent to the PLC-robot bridge 2 via a first controller communication interface 14. In addition, a robot state data packet from the PLC-robot bridge 2 may be received through the first controller communication interface 14, and serves as a data source for the robot control function block 12, to perform decision-making on robot state tracking and control logic.

As can be seen, the automation controller 1 stores a general-purpose robot control function block generated in compliance with a unified design standard; the automation controller 1 calls a corresponding robot control function block according to a control program for a robot and in conjunction with robot state data received from the PLC-robot bridge, the control program being written by the user based on the general-purpose robot control function block, and outputs corresponding first command data to the PLC-robot bridge.

The PLC-robot bridge 2 is a bridge connecting the automation controller 1 and a robot controller 3. It runs on an industrial computer or another embedded device on which a real-time operating system (such as RT-Linux) has been installed. The PLC-robot bridge 2 virtualizes robot interfaces of corresponding offline programming functions of robots of different types as a unified virtual interface, calls a corresponding offline programming function of a corresponding type of robot via the unified virtual interface according to the first command data, generates second command data, i.e. a robot command output to the corresponding robot controller 3, the corresponding robot controller 3 controls the corresponding robot, e.g. controls a mechanical arm 4 of the corresponding robot; at the same time, state data from the robot of the corresponding type is received through the unified virtual interface, and the state data is fed back to the automation controller 1.

In particular implementation, various specific forms of implementation of the PLC-robot bridge 2 are possible. For example, in one embodiment, the PLC-robot bridge 2 may be formed of modules, which convert commands of the automation controller to robot commands, and return the robot state to the automation controller 1. As shown in Fig. 1, these modules comprise: a second controller communication interface 21, a data switch 22, a command manager 23, a command execution module 24, a robot state manager 25, a robot control application interface (APIs) 26 and a robot communication interface 27.

The second controller communication interface 21 is used to realize a communication connection with the first controller communication interface 13 of the automation controller 1. The second controller communication interface 21 depends on an actual interface of the automation controller 1. It provides a physical interface and a communication protocol. For example, PROFINET is a common interface of a PLC S71500 controller, and communication between the PLC robot function block library and the data switch relies on the PROFINET hardware adapter and protocol. The controller communication interface 21 may also be another interface capable of transmitting real-time data.

The data switch 22 is used to receive, through the second controller communication interface 21, a command data packet from the automation controller 1, and return a robot state data packet to the automation controller 1 via the second controller communication interface 21.

The command manager 23 is used to perform a correctness check on the first command data, and when the check is passed, extract a valid data field therefrom for parsing, to obtain a corresponding command set and cache the command set. The command sets may be divided into three types: manage command sets, stop command sets and run command sets. In particular implementation, the command manager 23 may comprise a data preprocessor 231, a command parser 232 and a command buffer zone 233.

The data preprocessor 231 is used to check the correctness of data, including checking the heartbeat value, checking the transmission sequence number, checking the checksum value, checking the command check value, etc., and extracts a valid data field from the command data packet.

In addition, in other embodiments, consideration is given to the fact that the robot state and command execution state might affect the command execution process; therefore, the data preprocessor 231 may further receive robot state data from the robot state manager 25, and provide the robot state data to the command parser 232. In this case, the data preprocessor 231 may be further used to package the robot state data provided by the robot state manager 25, e.g. add a header field, a data validation field, a sequence number, etc., and push it to the data switch 22. Correspondingly, the robot state manager 25 may no longer package the robot state data, and no longer send data directly to the data switch 22.

The command parser 232 is used to realize command type identification, command data extraction, and the parsing of commands into corresponding command sets according to command type, then storing the command sets in the command buffer zone 233. Further, the command parser 232 may also obtain corresponding command sets in conjunction with the robot state data.

The command buffer zone 233 caches command data in the form of command sets, and can be accessed by the command execution module 24 to read command data.

The command execution module 24 accesses the command buffer zone 233 and extracts command data. The command execution module 24, via the unified virtual interface provided by the robot control APIs 26, calls and runs a corresponding offline programming function of a corresponding robot, to generate second command data. In particular implementation, different operations are performed according to different first command data; the first command data may include command type, command parameters and command execution conditions. The robot state and command execution state might affect the command execution process, so the command execution state is updated by the command manager 23, and the robot state data is provided by the robot state manager 25.

The robot state manager 25 reads robot state data via the virtual interface provided by the robot control APIs 26, including motion state data, error state data and other robot-related state data, manages the robot state data, then packages the robot state data before providing same to the data switch 22. In other embodiments, the robot state manager 25 may also provide unpackaged robot state data to the data preprocessor 231. Moreover, if the data preprocessor 231 is able to package robot state data and provide same to the data switch 22, the robot state manager 25 may no longer package robot state data and no longer provide robot state data directly to the data switch 22, instead indirectly providing robot state data to the data switch 22 via the data preprocessor 231, for feedback to the automation controller 1.

The robot control APIs 26 provide a robot interface strictly related to the actual robot. Robots of different manufacturers all have their own offline programming functions, and can call these via corresponding robot interfaces. The robot control APIs 26 are used to virtualize robot interfaces of corresponding offline programming functions of various industrial robots as a unified virtual interface. Moreover, the command execution module 24 issues commands based on the unified interface, while allowing the robot state manager 25 to read state data of various industrial robots based on the unified interface. Thus, the robot control API 26 screens different robots, and robots of different manufacturers can be controlled by the same program running on the automation controller 1.

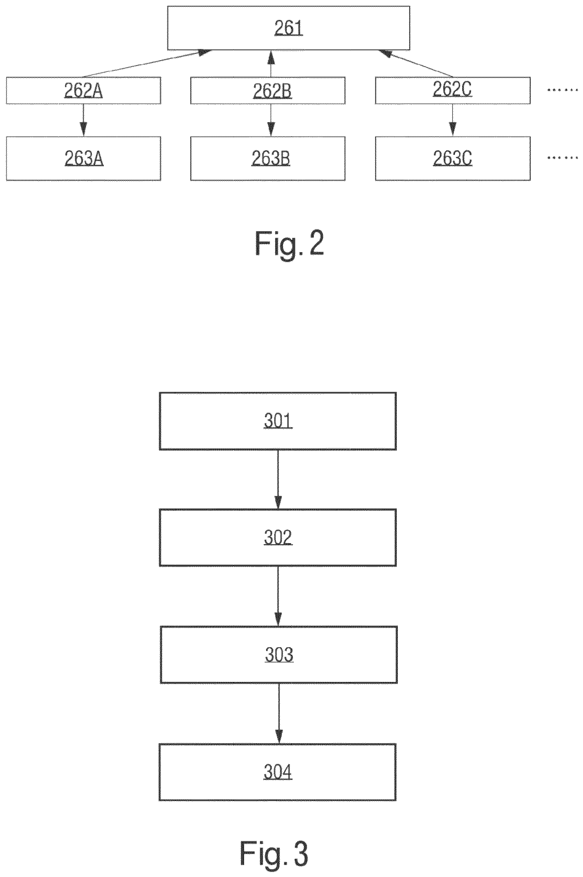

Fig. 2 shows a structural schematic drawing of robot control APIs 26 in one example; in this example, a conventional pure virtual function technique of an object-oriented programming language is used. As shown in Fig. 2, the robot control APIs 26 define an abstract unified virtual interface 261 for robot control and state reading, for upward application. Downward, it generalizes robot interfaces 262A, 262B, 262C, ... for robots of different robot manufacturers according to control parameters (i.e. robot instantiation parameters) in the second command data; these robot interfaces call offline programming functions 263A, 263B, 263C, ... provided by robot manufacturers, distinguishing differences between programming interfaces, instructions, data and state data between robots.

The robot communication interface 27 depends on the actual interface form of the robot controller 3; through the robot communication interface 27, instruction data and state data are exchanged between the PLC-robot bridge 2 and the robot controller 3, including outputting the second command data to the corresponding robot controller 3, such that the robot controller 3 can control the corresponding robot, e.g. control the mechanical arm 4 of the corresponding robot; at the same time, robot state data returned by the robot controller 3 is received. The robot communication interface 27 can use the following forms: a public network port (e.g. TCP/IP protocol), an industrial Ethernet port (e.g. Ethernet CAT), a CAN interface, etc.

The multi-type industrial robot control apparatus provided in embodiments of the present application may be used to realize the functions of the PLC-robot bridge.

The multi-type industrial robot control system and apparatus in embodiments of the present application have been described in detail above; the multi-type industrial robot control method in embodiments of the present application will now be described in detail below. The multi-type industrial robot control method in embodiments of the present application may be implemented on the multi-type industrial robot control system in embodiments of the present application, i.e. the multi-type industrial robot control system in embodiments of the present application may be used to perform the multi-type industrial robot control method in embodiments of the present application. For details which are not disclosed in detail in the method embodiments of the present application, see the corresponding descriptions in the system embodiments of the present application, which are not repeated individually here.

Fig. 3 is an exemplary flow chart of the multi-type industrial robot control method in an embodiment of the present application. As shown in Fig. 3, the method may comprise the following steps:
Step 301, an automation controller receives a control program for a robot written by a user based on a general-purpose robot control function block, which is generated in compliance with a unified design standard and stored in the automation controller; and receives robot state data fed back by a PLC-robot bridge.
Step 302, a corresponding robot control function block is called according to the control program and the robot state data, and corresponding first command data is outputted to the PLC-robot bridge.
Step 303, the PLC-robot bridge receives the first command data, calls a corresponding offline programming function of a corresponding type of robot via a unified virtual interface according to the first command data, and generates second command data for output to a corresponding robot controller, which controls a corresponding robot; the unified virtual interface is obtained by virtualizing robot interfaces of corresponding offline programming functions of different types of robot.

In particular implementation, the PLC-robot bridge receives the first command data, and performs a correctness check on the first command data, and when the check is passed, extracts a valid data field therefrom, and parses the valid data field to obtain a corresponding command set, and caches the command set; reads the cached command set, and calls and runs a corresponding offline programming function of a corresponding robot via the virtual interface according to the command set.

In addition, the PLC-robot bridge may be further used to generate a corresponding command set in conjunction with the robot state data when parsing the valid data field.

Step 304, the PLC-robot bridge receives robot state data from a corresponding type of robot via the unified virtual interface, and feeds the robot state data back to the automation controller.

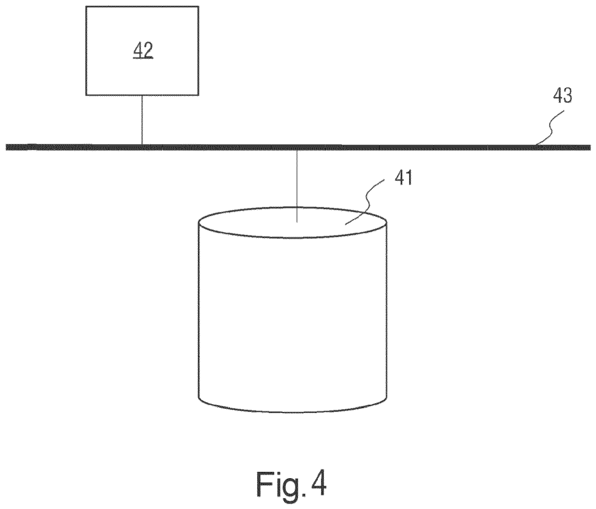

Fig. 4 is a structural schematic drawing of another multi-type industrial robot control system in an embodiment of the present application; the system may be used to realize the system shown in Figs. 1 - 2, or implement the device shown in Fig. 3. As shown in Fig. 4, the system may comprise: at least one memory 41 and at least one processor 42. In addition, some other components may also be included, such as a communication port, etc. These components perform communication via a bus 43.

The at least one memory 41 is used to store a computer program. In one embodiment, the computer program may be understood to comprise the various modules of the multi-type industrial robot control system shown in Figs. 1 - 2. In addition, the at least one memory 41 may also store an operating system, etc. Operating systems include but are not limited to: Android operating systems, Symbian operating systems, Windows operating systems, Linux operating systems, etc.

The at least one processor 42 is used to call the computer program stored in the at least one memory 41, and perform the multi-type industrial robot control method in embodiments of the present application.

Specifically, the at least one processor 42 is used to call the computer program stored in the at least one memory 41 to make the apparatus perform corresponding operations.

The processor 42 may be a CPU, a processing unit/module, an ASIC, a logic module or a programmable gate array, etc. It can receive and send data via the communication port.

It must be explained that not all of the steps and modules in the procedures and structural drawings above are necessary; certain steps or modules may be omitted according to actual needs. The order in which the steps are performed is not fixed, and may be adjusted as needed. The division of modules is merely functional division adopted to facilitate description; in practice, one module may be realized by multiple modules, and the functions of multiple modules may be realized by the same module, and these modules may be located in the same device or different devices.

It will be understood that hardware modules in the embodiments above may be realized mechanically or electronically. For example, a hardware module may include a specially designed permanent circuit or logic device (such as a dedicated processor, such as an FPGA or ASIC) for performing specific operations. A hardware module may also include a programmable logic device or circuit configured temporarily by software (e.g. including a general-purpose processor or another programmable processor) for performing specific operations. The decision to specifically use a mechanical method or a dedicated permanent circuit or a temporarily configured circuit (e.g. configured by software) to realize a hardware module may be made on the basis of cost and time considerations.

In addition, a computer-readable storage medium is further provided in embodiments of the present application, having stored thereon a computer program which can be executed by a processor and realize the multi-type industrial robot control method in embodiments of the present application. Specifically, a system or apparatus equipped with a storage medium may be provided, wherein software program code realizing the functions of any one of the above embodiments is stored on the storage medium, and a computer (or CPU or MPU) of the system or apparatus is caused to read and execute the program code stored in the storage medium. In addition, an operating system operating on a computer, etc. may be made to complete some or all of the actual operations by means of instructions based on program code. Program code read out from the storage medium may also be written into a memory installed in an expansion board inserted in the computer, or written into a memory installed in an expansion unit connected to the computer, and thereafter instructions based on the program code make a CPU etc. installed on the expansion board or expansion unit execute some or all of the actual operations, so as to realize the functions of any of the embodiments above. Embodiments of storage media used to provide program code include floppy disks, hard disks, magneto-optical disks, optical disks (e.g. CD-ROM, CD-R, CD-RW, DVD-ROM, DVD-RAM, DVD-RW, DVD+RW), magnetic tape, non-volatile memory cards and ROM. Optionally, program code may be downloaded from a server computer over a communication network.

It can be seen from the above solution that because a bridge connecting the automation controller and the robot controller, i.e. the PLC-robot bridge, is provided in the embodiments of the present application, the PLC-robot bridge virtualizing robot interfaces of corresponding offline programming functions of different types of robot as a unified virtual interface, a set of general-purpose robot function blocks may be provided in the automation controller, such that the user does not need to be concerned about programming differences between different robots, and can simply use the general-purpose robot function block directly to write an instantiation control program for a robot; subsequently, the PLC-robot bridge converts command data from the automation controller to a call instruction for an offline programming function of a corresponding type of robot via the unified virtual interface, and generates a corresponding control instruction to send to the robot controller, thereby realizing control of the corresponding robot.

In addition, by further configuring data checking, parsing and buffering operations in the PLC-robot bridge, the automation controller is enabled to send batches of control commands to the PLC-robot bridge, and the PLC-robot bridge then manages the process of executing sub-commands.

Furthermore, by having the PLC-robot bridge further manage the process of executing sub-commands according to robot state data, the reliability of command execution is improved.

The above are merely preferred embodiments of the present application, which are not intended to limit it. Any amendments, equivalent substitutions or improvements, etc. made within the spirit and principles of the present application should be included in the scope of protection thereof.

## Claims

1. A multi-type industrial robot control system, **characterized by** comprising: an automation controller (1) and a programmable logic controller (PLC)-robot bridge (2), wherein
the automation controller (1) stores a general-purpose robot control function block generated in compliance with a unified design standard, calls a corresponding robot control function block according to a control program for a robot and in conjunction with robot state data received from the PLC-robot bridge, the control program being written by a user based on the general-purpose robot control function block, and outputs corresponding first command data to the PLC-robot bridge (2);
the PLC-robot bridge (2) virtualizes robot interfaces of corresponding offline programming functions of different types of robot as a unified virtual interface, calls a corresponding offline programming function of a corresponding type of robot via the unified virtual interface according to the first command data, and generates second command data for output to a corresponding robot controller (3), and the corresponding robot controller (3) controls a corresponding robot; at the same time, robot state data from a corresponding type of robot is received via the unified virtual interface, and the robot state data is fed back to the automation controller (1).

2. The multi-type industrial robot control system as claimed in claim 1, **characterized in that** the PLC-robot bridge (2) comprises:
a data switch (22), for receiving the first command data from the automation controller (1); and sending the robot state data to the automation controller (1);
a robot control application programming interface (26), for virtualizing robot interfaces of corresponding offline programming functions of different types of robot as a unified virtual interface;
a command manager (23), for performing a correctness check on the first command data, and when the check is passed, extracting a valid data field therefrom for parsing to obtain a corresponding command set, and caching the command set;
a command execution module (24), for reading the command set, and calling and running a corresponding offline programming function of a corresponding robot via the virtual interface provided by the robot control application programming interface according to the command set, to generate second command data;
a robot state manager (25), for reading, via the virtual interface provided by the robot control application programming interface, robot state data returned by the robot controller, and providing the robot state data to the data switch;
a robot communication interface (27), for outputting the second command data to a corresponding robot controller, and receiving robot state data returned by the robot controller.

3. The multi-type industrial robot control system as claimed in claim 2, **characterized in that** the command manager (23) comprises:
a data preprocessor (231), for performing a correctness check on the first command data, and when the check is passed, extracting a valid data field therefrom;
a command parser (232), for parsing the valid data field to obtain a corresponding command set;
a command buffer zone (233), for caching the command set.

4. The multi-type industrial robot control system as claimed in claim 2, **characterized in that** the data preprocessor (231) is further used to receive robot state data from the robot state manager, and provide the robot state data to the command parser (232) ;
the command parser (232) further obtains a corresponding command set according to the robot state data.

5. The multi-type industrial robot control system as claimed in any one of claims 1 - 4, **characterized by** further comprising: a robot controller (3), for receiving the second command data from the PLC-robot bridge (2), and controlling a corresponding robot to perform a corresponding operation according to the second command data; and feeding state data of the robot back to the PLC-robot bridge (2).

6. A multi-type industrial robot control apparatus, **characterized by** comprising:
a data switch (22), for receiving first command data from an automation controller; and sending acquired robot state data to the automation controller; the first command data being first command data obtained by the automation controller calling a corresponding robot control function block according to a control program for a robot and in conjunction with robot state data from the switch, the control program being written by a user based on a general-purpose robot control function block, which is generated in compliance with a unified design standard and stored in the automation controller;
a robot control application programming interface (26), for virtualizing robot interfaces of corresponding offline programming functions of different types of robot as a unified virtual interface;
a command manager (23), for performing a correctness check on the first command data, and when the check is passed, extracting a valid data field therefrom for parsing to obtain a corresponding command set, and caching the command set;
a command execution module (24), for reading the command set, and calling and running a corresponding offline programming function of a corresponding robot via the virtual interface provided by the robot control application programming interface according to the command set, to generate second command data;
a robot state manager (25), for reading, via the virtual interface provided by the robot control application programming interface, robot state data returned by the robot controller, packaging the robot state data and then providing same to the data switch;
a robot communication interface (27), for outputting the second command data to a corresponding robot controller, and receiving robot state data returned by the robot controller.

7. The multi-type industrial robot control apparatus according to claim 6, **characterized in that** the command manager (23) comprises:
a data preprocessor (231), for performing a correctness check on the first command data, and when the check is passed, extracting a valid data field therefrom;
a command parser (232), for parsing the valid data field to obtain a corresponding command set;
a command buffer zone (233), for caching the command set.

8. The multi-type industrial robot control system according to claim 6, **characterized in that** the data preprocessor (231) is further used to receive robot state data from the robot state manager, and provide the robot state data to the command parser (232) ;
the command parser (232) further obtains a corresponding command set according to the robot state data.

9. A multi-type industrial robot control method, **characterized by** comprising:
an automation controller receiving a control program for a robot written by a user based on a general-purpose robot control function block, which is generated in compliance with a unified design standard and stored in the automation controller; and receiving robot state data fed back by a PLC-robot bridge (301);
calling a corresponding robot control function block according to the control program and the robot state data, and outputting corresponding first command data (302) to the PLC-robot bridge (302);
the PLC-robot bridge receiving the first command data, calling a corresponding offline programming function of a corresponding type of robot via a unified virtual interface according to the first command data, generating second command data for output to a corresponding robot controller, and the corresponding robot controller controlling a corresponding robot; the unified virtual interface being obtained by virtualizing robot interfaces of corresponding offline programming functions of different types of robot (303);
the PLC-robot bridge receiving robot state data from a corresponding type of robot via the unified virtual interface, and feeding the robot state data back to the automation controller (304).

10. The multi-type industrial robot control method as claimed in claim 9, **characterized in that** the PLC-robot bridge receiving the first command data, and calling a corresponding offline programming function of a corresponding type of robot via a unified virtual interface according to the first command data, comprises:
the PLC-robot bridge receiving the first command data, and performing a correctness check on the first command data; when the check is passed, extracting a valid data field therefrom, and parsing the valid data field to obtain a corresponding command set, and caching the command set;
reading the cached command set, and calling and running a corresponding offline programming function of a corresponding robot via the virtual interface according to the command set.

11. The multi-type industrial robot control method as claimed in claim 10, **characterized in that** the PLC-robot bridge is further used for generating a corresponding command set in conjunction with the robot state data when parsing the valid data field.

12. A multi-type industrial robot control system, **characterized by** comprising: at least one memory (41) and at least one processor (42), wherein:
the at least one memory (41) is used to store a computer program;
the at least one processor (42) is used to call the computer program stored in the at least one memory (41) to make the system perform the multi-type industrial robot control method as claimed in any one of claims 9 - 11.

13. A computer-readable storage medium, having stored thereon a computer program, **characterized in that** the computer program is executable by a processor and realizes the multi-type industrial robot control method as claimed in any one of claims 9 - 11.
